# FASCICULE DE BREVET EUROPEEN

(11) **EP 2 400 197 B1**
(45) Date de publication et mention de la délivrance du brevet: **14.11.2012**
(21) Numéro de dépôt: 11171371.5
(22) Date de dépôt: 24.06.2011
(51) Int. Cl.: F16L 3/04, F16B 15/00, F24D 3/14

(54) **Agrafe de fixation de tubes ou de câbles sur une structure porteuse et procédé de fabrication d'une telle agrafe**
Klammer für befestigung von rohren oder kabeln auf einem unterbau und verfahren zur herstellung einer solchen klammer
Clip for fixing pipes or cables to a bearing structure and process for manucturing such a clip

(30) Priorité: 25.06.2010 FR 1055110
(43) Date de publication de la demande: 28.12.2011
(73) Titulaire: Chappuis, Fabrice Philippe Thierry, 01350 Culoz (FR)
(72) Inventeur: Chappuis, Fabrice Philippe Thierry, 01350 Culoz (FR)
(74) Mandataire: Myon, Gérard Jean-Pierre

(56) Documents cités:
- EP-A1- 2 151 634
- EP-A2- 1 248 047
- DE-A1- 4 005 659
- DE-A1- 4 242 251
- DE-C1- 19 809 587

## Description

La présente invention concerne une agrafe de fixation de tubes ou de câbles sur une structure porteuse, notamment de tubes de circulation de fluide caloporteur ou de câbles chauffants sur des dalles isolantes. L'invention concerne également un procédé de fabrication d'une telle agrafe.

Dans le domaine de l'installation de systèmes de chauffage par le sol, il est connu d'installer des tubes de circulation de fluide caloporteur sur des dalles isolantes réalisées en polyuréthane ou en polystyrène. Pour cela, il est connu d'utiliser des agrafes en matériau synthétique globalement en forme de U et dont les branches sont pourvues de pointes en harpon permettant leur accrochage dans les dalles. Ces pointes en harpon sont généralement équipées d'ailettes obliques permettant d'améliorer l'ancrage de l'agrafe dans la dalle et d'empêcher que l'agrafe ne sorte accidentellement de la dalle avant que la chape recouvrant les tubes ne soit coulée.

DE 4242251 montre un exemple d'une agrafe connue.

Les ailettes des agrafes de fixation connues de l'homme du métier ont tendance à se retourner lorsque l'on tente de les retirer d'une dalle isolante. Leur pouvoir d'accrochage dans la matière s'en trouve donc réduit et augmente le risque de détérioration des tubes contenant le fluide caloporteur ou des câbles.

C'est à ces inconvénients qu'entend remédier l'invention en proposant une nouvelle agrafe de fixation de tubes ou de câbles sur une structure porteuse, dont la structure lui permet d'augmenter sa résistance à l'arrachage, en empêchant les ailettes des pointes en harpon de se retourner sous l'effet d'un effort d'arrachement.

A cet effet, l'invention concerne une agrafe de fixation de tubes ou de câbles sur une structure porteuse, comprenant deux branches terminées chacune par une pointe en harpon munie d'ailettes obliques. Cette agrafe est caractérisée en ce que chaque ailette comprend une partie fixe par rapport à l'agrafe et une partie mobile par rapport à la partie fixe, en ce que chaque ailette présente, au niveau de la jonction entre sa partie fixe et sa partie mobile, une portion de section transversale réduite bordée, sur un côté opposé par rapport aux branches, par un évidement délimité par des faces planes opposables, en ce que ces faces planes sont aptes à venir en appui surfacique dans une position alignée des parties fixes et mobiles, et en ce que les parties mobiles, comportent, à leur extrémité opposée aux jonctions, des griffes s'étendant dans une direction opposée par rapport aux branches de l'agrafe.

Grâce à l'invention, l'appui surfacique créé entre la partie fixe et la partie mobile de chaque ailette des pointes en harpon permet d'augmenter sensiblement la résistance des ailettes à un effort d'arrachement de l'agrafe ayant tendance à retourner les ailettes et à réduire leur pouvoir d'accrochage dans la matière. Ces appuis surfaciques, conjugués à l'action des griffes permettent d'améliorer l'ancrage des parties mobiles des ailettes dans la dalle isolante.

Selon un avantage de l'invention, les jonctions entre les parties fixes et les parties mobiles des ailettes sont adaptées pour autoriser une rotation des parties mobiles par rapport aux parties fixes dans le plan des agrafes. Cela permet d'améliorer la pénétration de l'agrafe dans l'isolant.

L'invention concerne également un procédé de moulage d'agrafes telles que mentionnées ci-dessus, caractérisé en ce que les parties mobiles des ailettes sont moulées dans une position où les faces planes ne sont pas en contact.

Selon un avantage de l'invention, les parties mobiles des ailettes sont moulées sensiblement parallèlement aux branches des agrafes.

L'invention concerne également un procédé de fabrication d'agrafes telles que mentionnées ci-dessus, caractérisé en ce qu'il comprend des étapes consistant à : a) mouler les parties mobiles des ailettes alignées dans le prolongement des parties fixes des ailettes ; b) pratiquer, sur un côté de chaque ailette opposé par rapport aux branches, une entaille perpendiculaire à l'ailette et s'étendant sur une partie de la section transversale de l'ailette.

Selon un autre avantage de l'invention, l'entaille est réalisée à l'étape b) au moyen d'une lame de coupe ou d'un faisceau laser.

Selon un avantage de l'invention, lors du moulage des agrafes, les griffes sont réalisées de façon monobloc avec les ailettes.

L'invention sera mieux comprise et d'autres avantages de celle-ci apparaîtront plus clairement à la lumière de la description qui va suivre d'un mode de réalisation d'une agrafe conforme à son principe et de deux modes de réalisation d'un procédé de fabrication d'une telle agrafe, donnée uniquement à titre d'exemple et faite en référence aux dessins annexés dans lesquels :
- la figure 1 est une vue de face d'une agrafe conforme à l'invention ;
- la figure 2 est une vue de face et à plus grande échelle d'une pointe en harpon de l'agrafe de la figure 1, enfoncée dans une dalle isolante ;
- la figure 3 est une vue analogue à la figure 2 sur laquelle des parties mobiles d'ailettes d'une pointe en harpon de l'agrafe des figures 1 et 2 sont alignées avec des parties fixes.

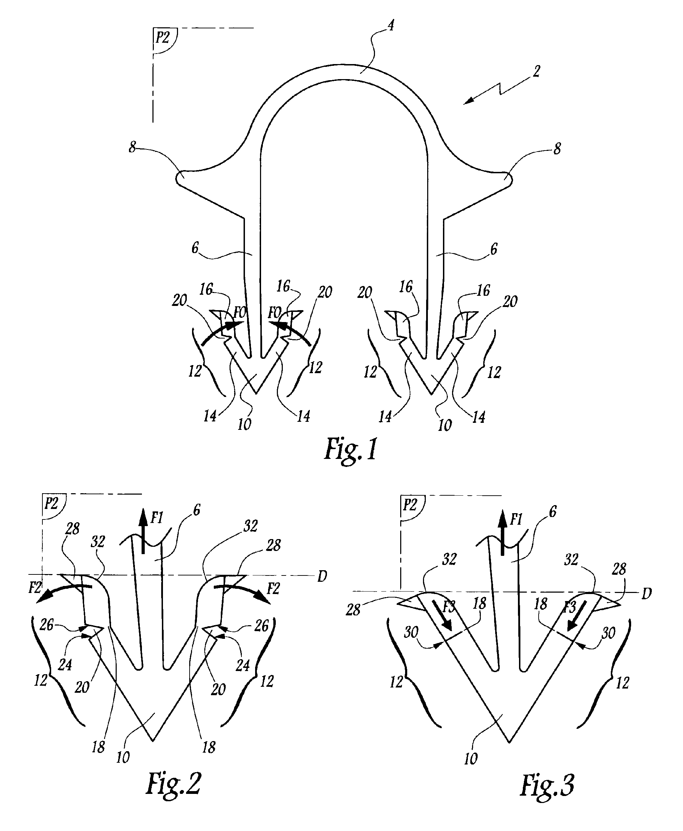

L'agrafe 2 représentée à la figure 1 présente, selon un plan P2, une forme en U comportant une partie médiane courbe 4 et deux branches 6 sensiblement rectilignes et parallèles. Aux jonctions entre la partie médiane 4 et les branches 6, l'agrafe 2 présente des appendices 8 destinés à coopérer avec un dispositif de pose d'agrafes connu par exemple de DE-A-31 29 818. Chacune des branches 6 est terminée par une pointe en harpon 10, comportant deux ailettes obliques 12. Chaque ailette 12 comporte une partie 14 fixe par rapport aux branches 6 et une partie 16 mobile par rapport à la partie fixe 14.

A la jonction entre les parties fixes 14 et mobiles 16 de chaque ailette 12, chaque ailette 12 présente un évidement 20, définissant une portion réduite 18 de la section transversale de l'ailette 12. Cet évidement 20 se situe sur un côté de chaque ailette 12 opposé par rapport à la branche 6 à laquelle cette ailette est rattachée. Comme il ressort plus précisément de la figure 2, les évidements 20 sont délimités par deux faces planes opposables 24 et 26. Les faces planes 24 sont solidaires des parties fixes 14 des ailettes 12, alors que les faces planes 26 sont solidaires des parties mobiles 16 des ailettes 12.

Chaque partie mobile 16 des ailettes 12 est terminée, à son extrémité 32 opposée par rapport aux parties fixes 14, par une griffe de blocage 28 monobloc avec l'ailette 12 et s'étendant sensiblement perpendiculairement à l'opposé de la branche 6 à laquelle l'ailette 12 est rattachée. Les griffes de blocage 28 et les évidements 20 sont donc présents sur le même côté des ailettes 12.

Le fonctionnement est le suivant. Lors de l'enfoncement d'une agrafe 2 dans une dalle isolante, au moyen d'un dispositif de pose, les pointes en harpon 10 s'ancrent dans la matière et les ailettes 12 viennent en appui contre une partie interne D de la dalle isolante, représentée en traits pointillés aux figures 2 et 3, afin de verrouiller la fixation des agrafes 2 et des câbles ou tubes destinés à l'installation de chauffage. Lors de cette manipulation, les parties mobiles 16 ont tendance à pivoter dans le plan P2, par rapport aux parties fixes 14 et à se rapprocher des branches 6, dans le sens des flèches F0, pour atteindre une position sensiblement parallèle aux branches 6.

Ceci améliore la pénétration de l'agrafe 2 dans l'isolant et facilite le travail du poseur. Cela permet également de réduire la détérioration de l'isolant lors de la pose et améliore la tenue mécanique de l'agrafe 2 dans l'isolant.

En cas d'arrachement accidentel, une force exercée sur l'agrafe, selon la flèche F1 aux figures 2 et 3, dirigée dans le sens de l'extraction de l'agrafe d'une dalle isolante induit des efforts de réaction exercés par la partie interne D des dalles isolantes sur les ailettes 12, en particulier au niveau des griffes 28, selon les flèches F2 à la figure 2. Ces efforts tendent à écarter les ailettes 12 des branches 6 de l'agrafe 2. Les parties mobiles 16 étant auparavant orientées sensiblement parallèlement aux branches 6 et obliquement par rapport aux parties fixes 14, les efforts sur la flèche F2 ont tendance à faire pivoter, dans le plan P2, les parties mobiles 16 vers une position dans laquelle elles sont alignées avec les parties fixes 14, comme illustré à la figure 3.

Dans la configuration de la figure 3, un effort d'extraction sur la flèche F1 provoque la coopération des faces planes 24 et 26 sous la forme d'un appui surfacique selon la flèche F3 à la figure 3, exercé par la face plane 26 de chaque partie mobile 16 sur la face plane 24 de chaque partie fixe 14. Cet appui permet d'éviter le pliage des ailettes 12 sous l'effet de l'effort d'extraction F1 et rend plus difficile l'arrachage des agrafes 2. La rotation effectuée par les parties mobiles 16 par rapport aux parties fixes 14 est permise par les griffes de blocage 28 qui, sous l'effet de la force d'extraction F1, opposent une résistance au mouvement en se bloquant dans la matière de la dalle isolante et entraînent le blocage des parties 16 contre les parties 14.

Pour la réalisation de telles agrafes 2, un procédé de fabrication consistant à mouler par injection l'agrafe en matière synthétique d'une seule pièce est mis en oeuvre. A cet effet, le moule utilisé présente des formes permettant de mouler les parties fixe 14 et mobile 16 d'ailettes 12 avec un rétrécissement de section à leur jonction et un alignement des parties mobiles 16 avec les branches 6. Le moule utilisé dans ce procédé prévoit également des formes permettant de réaliser les griffes de blocage 28.

L'agrafe 2 réalisée à l'aide de ce moule met en oeuvre une déformation de la matière au niveau des portions réduites 18, permettant une rotation des parties mobiles 16 par rapport aux parties fixes 14 et la coopération des faces planes 24 et 26 en cas de sortie accidentelle de l'agrafe 2.

Selon une autre forme de réalisation d'un procédé de fabrication de l'agrafe 2 selon l'invention, le moule mis en oeuvre comporte une forme classique d'agrafe à pointe en harpon, comportant, comme c'est le cas dans le premier mode de réalisation, des formes permettant de réaliser les griffes d'accrochage. Dans cette forme de réalisation, les parties mobiles 16 des ailettes 12 sont moulées de façon à être alignées dans le prolongement des parties fixes des ailettes 12. Le procédé de fabrication comporte dans ce cas une étape postérieure au moulage par injection de l'agrafe 2 et consistant à pratiquer des entailles sur les ailettes 12, sur un côté de ces ailettes opposé par rapport aux branches 6. Ces entailles 30 sont pratiquées par tout moyen approprié sensiblement perpendiculairement à la direction des ailettes 12, par exemple par une lame de coupe ou par un faisceau laser. Elles s'étendent sur une partie de la section transversale des ailettes 12 de façon à créer les deux faces planes opposables 24 et 26. Les agrafes réalisées par ce procédé présentent un aspect similaire à celui de la figure 3.

L'utilisation d'une agrafe 2 réalisée au moyen de ce procédé permet, lors de la fixation de l'agrafe 2 dans une dalle isolante, une déformation des ailettes 12 au niveau des encoches 30. Une fois les agrafes 2 fixées dans la matière, elles présentent l'aspect de la figure 2, les parties d'ailettes situées entre les encoches 30 et les extrémités portant les griffes de blocage 28 subissant une rotation par rapport à la pointe 10 en direction des branches 6.

En cas d'arrachement accidentel, les faces planes 24 et 26 se rapprochent sous l'effet de la force de réaction de la partie interne D et du matériau des dalles, ce qui permet l'exercice de l'appui surfacique F3 augmentant la résistance des ailettes 12 au pliage.

La possibilité de flexion des parties mobiles 16 d'ailettes par rapport aux parties fixes 14 rend possible une augmentation de la section des ailettes 12 par rapport à celles de l'état de la technique, car la réduction de la résistance à la pénétration dans l'isolant annule le besoin de réduire la section des ailettes 12. De ce fait, il est possible de réaliser des faces opposables 24 et 26 d'une aire augmentée ce qui renforce la résistance des agrafes à l'arrachement.

## Revendications

1. Agrafe (2) de fixation de tubes ou de câbles sur une structure porteuse, comprenant deux branches (6) terminées chacune par une pointe (10) en harpon munie d'ailettes (12) obliques, **caractérisée en ce que** chaque ailette (12) comprend une partie fixe (14) par rapport à l'agrafe (2) et une partie mobile (16) par rapport à la partie fixe (14), **en ce que** chaque ailette (12) présente, au niveau de la jonction entre sa partie fixe (14) et sa partie mobile (16), une portion (18) de section transversale réduite bordée, sur un côté opposé par rapport aux branches (6), par un évidement (20) délimité par des faces planes (24, 26) opposables, **en ce que** ces faces planes (24, 26) sont aptes à venir en appui surfacique (F3) dans une position alignée des parties fixes (14) et mobiles (16), et **en ce que** les parties mobiles (16), comportent, à leur extrémité (32) opposée aux jonctions, des griffes (28) s'étendant dans une direction opposée par rapport aux branches (6) de l'agrafe (2).

2. Agrafe de fixation selon la revendication 1, **caractérisée en ce que** les jonctions entre les parties fixes (14) et les parties mobiles (16) des ailettes (12) sont adaptées pour autoriser une rotation (F0, F2) des parties mobiles (16) par rapport aux parties fixes (14) dans le plan (P2) des agrafes (2).

3. Procédé de moulage d'agrafes (2) selon la revendication 1 ou 2, **caractérisé en ce que** les parties mobiles (16) des ailettes (12) sont moulées dans une position où les faces planes (24, 26) ne sont pas en contact.

4. Procédé de moulage d'agrafes (2) selon la revendication 3, **caractérisé en ce que** les parties mobiles (16) des ailettes (12) sont moulées sensiblement parallèlement aux branches (6) des agrafes (2).

5. Procédé de fabrication d'agrafes (2) selon l'une des revendications 1 ou 2, **caractérisé en ce qu'**il comprend des étapes consistant à :
a) mouler les parties mobiles (16) des ailettes (12) alignées dans le prolongement des parties fixes (14) des ailettes ;
b) pratiquer, sur un côté de chaque ailette (12) opposé par rapport aux branches (6), une entaille (30) perpendiculaire à l'ailette (12) et s'étendant sur une partie de la section transversale de l'ailette (12).

6. Procédé selon la revendication 5, **caractérisé en ce qu'**à l'étape b), l'entaille (30) est réalisée au moyen d'une lame de coupe ou d'un faisceau laser.

7. Procédé selon l'une des revendications 3 à 6, **caractérisé en ce qu'**il consiste à réaliser les griffes (28) aux extrémités des ailettes (12), de façon monobloc avec ces ailettes (12) lors du moulage des agrafes (2).

## Claims

1. Fastening staple (2) for fastening tubes or cables onto a carrier structure, said staple comprising two legs (6), each terminated by a harpoon-like point (10) provided with oblique fins (12), **characterised in that** each fin (12) comprises a part (14) which is fixed in relation to the staple (2) and a part (16) which is movable in relation to the fixed part (14); **in that** each fin (12) has, at the junction between its fixed part (14) and its movable part (16), a portion (18) of reduced cross-section which is bordered, on an opposite side from the legs (6), by a recess (20) delimited by flat faces (24, 26) which can be opposed; **in that** the said flat faces (24, 26) are capable of coming into surface contact (F3) when the fixed parts (14) and movable parts (16) are in an aligned position; and **in that** the movable parts (16) comprise, at their opposite end (32) from the junctions, claws (28) which extend in an opposite direction to the legs (6) of the staple (2).

2. Fastening staple according to claim 1, **characterised in that** the junctions between the fixed parts (14) and the movable parts (16) of the fins (12) are adapted to allow a rotation (F0, F2) of the movable parts (16) in relation to the fixed parts (14) within the plane (P2) of the staples (2).

3. Method of moulding staples (2) according to claim 1 or 2, **characterised in that** the movable parts (16) of the fins (12) are moulded in a position in which the flat faces (24, 26) are not in contact.

4. Method of moulding staples (2) according to claim 3, **characterised in that** the movable parts (16) of the fins (12) are moulded substantially parallel to the legs (6) of the staples (2).

5. Method of manufacturing staples (2) according to either of claims 1 or 2, **characterised in that** it comprises stages which consist in:
a) moulding the movable parts (16) of the fins (12) in a manner aligned within the prolongation of the fixed parts (14) of the fins;
b) making, on an opposite side of each fin (12) from the legs (6), a cut (30) which is perpendicular to the fin (12) and extends over part of the cross-section of said fin (12).

6. Method according to claim 5, **characterised in that**, at stage b), the cut (30) is produced by means of a cutting blade or of a laser beam.

7. Method according to one of claims 3 to 6, **characterised in that** it consists in producing the claws (28) at the ends of the fins (12) in one piece with said fins (12) during the moulding of the staples (2).

## Patentansprüche

1. Klammer (2) zur Befestigung von Rohren oder Kabeln an einer Tragstruktur, umfassend zwei Schenkel (6), die jeweils mit einer harpunenförmigen Spitze (10) enden, die mit schrägen Flügeln (12) versehen ist, **dadurch gekennzeichnet, dass** jeder Flügel (12) einen in Bezug zur Klammer (2) festen Teil (14) und einen in Bezug zu dem festen Teil (14) beweglichen Teil (16) umfasst, dass jeder Flügel (12) im Bereich der Verbindung zwischen seinem festen Teil (14) und seinem beweglichen Teil (16) einen kleineren Querschnitt (18) aufweist, der auf einer den Schenkeln (6) gegenüber liegenden Seite von einer Aussparung (20) umrandet ist, die von gegenüberstellbaren ebenen Flächen (24, 26) begrenzt ist, dass diese ebenen Flächen (24, 26) geeignet sind, in einer ausgerichteten Position der festen (14) und beweglichen Teile (16) flach aneinander anzuliegen (F3), und dass die beweglichen Teile (16) an ihrem den Verbindungen gegenüber liegenden Ende (32) Greifer (28) umfassen, die sich in eine zu den Schenkeln (6) der Klammer (2) entgegen gesetzte Richtung erstrecken.

2. Befestigungsklammer nach Anspruch 1, **dadurch gekennzeichnet, dass** die Verbindungen zwischen den festen Teilen (14) und den beweglichen Teilen (16) der Flügel (12) dazu vorgesehen sind, eine Drehung (F0, F2) der beweglichen Teile (16) in Bezug zu den festen Teilen (14) in der Ebene (P2) der Klammern (2) zu gestatten.

3. Verfahren zum Formen von Klammern (2) nach Anspruch 1 oder 2, **dadurch gekennzeichnet, dass** die beweglichen Teile (16) der Flügel (12) in einer Position geformt werden, in der die ebenen Flächen (24, 26) nicht miteinander in Kontakt sind.

4. Verfahren zum Formen von Klammern (2) nach Anspruch 3, **dadurch gekennzeichnet, dass** die beweglichen Teile (16) der Flügel (12) im Wesentlichen parallel zu den Schenkeln (6) der Klammern (2) geformt werden.

5. Verfahren zur Herstellung von Klammern (2) nach einem der Ansprüche 1 oder 2, **dadurch gekennzeichnet, dass** es die folgenden Schritte umfasst, darin bestehend:
a) die beweglichen Teile (16) der Flügel (12), die in der Verlängerung der festen Teile (14) der Flügel ausgerichtet sind, zu formen;
b) auf einer Seite jedes Flügels (12), die den Schenkeln (6) gegenüber liegt, eine Kerbe (30) senkrecht auf den Flügel (12) einzuarbeiten, die sich auf einem Teil des Querschnitts des Flügels (12) erstreckt.

6. Verfahren nach Anspruch 5, **dadurch gekennzeichnet, dass** in Schritt b) die Kerbe (30) mit Hilfe eines Schneidblattes oder eines Laserstrahls eingearbeitet wird.

7. Verfahren nach einem der Ansprüche 3 bis 6, **dadurch gekennzeichnet, dass** es darin besteht, die Greifer (28) an den Enden der Flügel (12) einstückig mit diesen Flügeln (12) beim Formen der Klammern (2) herzustellen.
